# EUROPEAN PATENT APPLICATION

(11) **EP 3 330 078 A1**
(43) Date of publication of application: **06.06.2018**
(21) Application number: 16202135.6
(22) Date of filing: 05.12.2016
(51) Int. Cl.: B32B 18/00, C04B 37/00

(54) **IMPROVEMENT OF INTER-LAYER-STABILITY OF CERAMIC MATRIX COMPOSITES**

(71) Applicant: Siemens Aktiengesellschaft, 80333 München (DE)
(72) Inventor: Hollingsworth, Peter Stuart, 10589 Berlin (DE); Sadovoy, Alexandr, 14059 Berlin (DE)

(57) **Abstract**

By coating green plies (7', 7", ...) of a green CMC component (4) with Aluminum (Al) before sintering the plies (7', 7", ...) together, a good interlayer stability is reached for the CMC component (40).

## Description

The invention relates to the improvement of the mechanical strength of ceramic matrix composites by improving the interlayer-stability of ceramic matrix composites.

Ceramic Matrix Composites (CMC) are composed of several plies. These plies comprise a ceramic matrix material and ceramic fibers. The weak point of the CMCs is the interlamellar strength, when a force is acting orthogonal to the fiber direction.

Currently, the CMC plies are manually put together and heat treated afterwards. This heat treatment leads to a diffusion and better cohesion between the plies.

The different plies are not are bonded via their meshwork, but just via diffusion resulting from the sintering process. This leads to the presence of pores in the diffusion zone and a weak and brittle bonding between the plies.

It is therefore aim of the invention to solve the problem given above.

The problem is solved by a method according to claim 1 and CMC components according to claim 2.

In the sub claims further advantages are listed which can be combined with each other arbitrarily to yield further advantages.

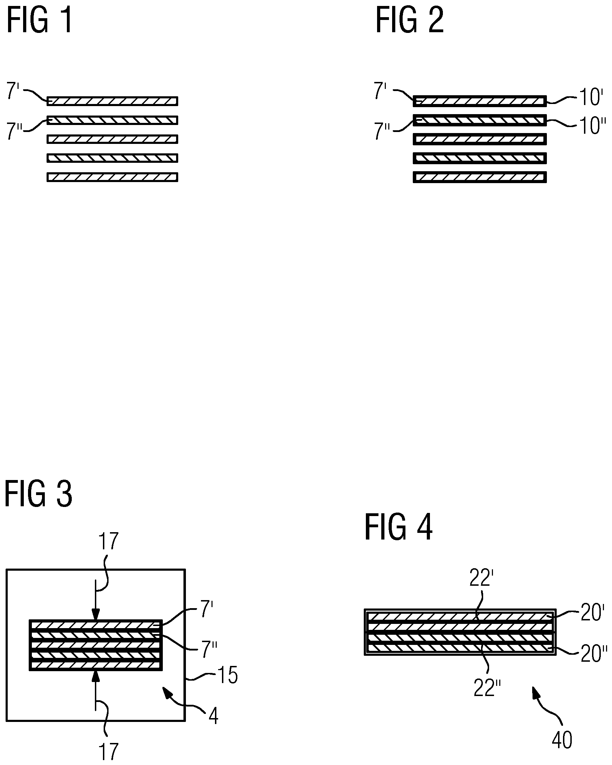

The figures 1 to 3 show the schematic procedure of improving the interlayer stability of a ceramic matrix composite, and figure 4 shows the final product.

This invention relates to all CMC matrix composites 40 with plies 20', 20" , ...(Fig. 4) wherein several green plies 7', 7", ... are produced (Fig. 1) and stacked (Fig. 2) to yield a green CMC component 4 (Fig. 3).

Prior to the assembly of the green plies 7', 7", ..., the green plies 7', 7", especially all green plies 7', 7", ... are at least partially, especially fully coated with a layer 10', 10", ... of Aluminum (Al) or an aluminum alloy (Fig. 2), especially in case of Ox-Ox or Al₂O₃-CMC's 40 (Fig 4).

Especially the connecting surfaces which are pressed together are coated. The outermost surfaces of outermost plies 7', can be without coating, and also the front side can be without coating except for other reasons (bonding).

The layer 10' , 10", ... (a few µm thick) of aluminum (Al) can be applied via powder deposition or vapor deposition or any suitable method.
The coating material cramps with the roughness of the surface of the green CMC 4.

After that all green plies 7' , 7", ... are stacked together (Fig. 3).

By stacking them and pressing 17 (Fig. 3) the green plies 7', 7", ... together in an oven 15 a good interconnection between the individually green plies 7', 7", ... are produced (Fig. 4), wherein the green plies 7', 7" are also sintered together.

The step of heat treatment has to be adapted to the needs of the transformation from metallic Aluminum (Al) or from an aluminum alloy to Al₂O₃ or another oxides.

In the oven 15 the coating of aluminum (Al) melts and fills out every gap of the CMC surface (form-closed connection).

Afterwards, the Aluminum (Al) transforms to Alumina (Al₂O₃) and reacts with the green CMC plies 7', 7'', .... This leads to a strong adhesive bonding between the separate plies 20', 20" of the final CMC part 40 (Fig. 4).

While heat treating the assembled green plies 7', 7", ... in a conventional oven 15 (in air atmosphere or low vacuum), the Aluminum (Al) layer 10', 10" is transformed to Al₂O₃ 22', 22", ... (Fig. 4). This leads to a strong bonding between the CMC plies 20', 20" , ... and improves the interlamellar strength of the final CMC 40.

## Claims

1. Method to produce a CMC component (40),
wherein the CMC component (40) comprises several plies (20', 20'', ...) made of green plies (7', 7", ...),
wherein each green ply (7', 7', ...) comprises fibers embedded in a ceramic material as matrix,
wherein at least one green ply (7', 7'', ...),
especially all green plies (7', 7", ...),
are at least partially,
especially fully
coated with a layer (10', 10'', ...) of Aluminum (Al) or of an Aluminum alloy,
pressed together and
sintered together.

2. Green CMC component (4) or CMC component (40),
which comprises several green plies (7', 7", ...) or plies (20', 20" , ....),
wherein between at least one, especially between all green plies (7', 7", ...) or plies (20', 20", ....) a layer (10', 10", ...) of Aluminum, Aluminum alloy or Alumina is present.

3. Method, green CMC component or CMC-component according to claim 1 or 2,
wherein the ceramic material as matrix comprises Alumina (Al₂O₃).

4. Method, green CMC component or green CMC-component according to any of claims 1, 2 or 3,
wherein the composition of the fibers comprises Alumina, Mullite or mixtures thereof.
